# EUROPEAN PATENT APPLICATION

(11) **EP 3 127 984 A1**
(43) Date of publication of application: **08.02.2017**
(21) Application number: 15774104.2
(22) Date of filing: 02.04.2015
(51) Int. Cl.: C09K 3/14, B24B 37/00, H01L 21/304

(54) **POLISHING COMPOSITION FOR HARD MATERIALS**

(30) Priority: 04.04.2014 JP 2014078106
(71) Applicant: Fujimi Incorporated, Kiyosu-shi, Aichi 452-8502 (JP)
(72) Inventor: ASHITAKA, Keiji, Kiyosu-shi Aichi 452-8502 (JP); TOUJINBARA, Kazuma, Kiyosu-shi Aichi 452-8502 (JP); MIWA, Naoya, Kiyosu-shi Aichi 452-8502 (JP)
(74) Representative: Grünecker Patent- und Rechtsanwälte PartG mbB
(86) International application number: PCT/JP2015/060502
(87) International publication number: WO 2015/152383

(57) **Abstract**

This invention provides a polishing composition with which high-rate polishing is possible in an application where an object formed of a hard material is polished and also a method for producing a hard material, using the polishing composition. The polishing composition provided by this invention is characterized by that an abrasive formed of titanium diboride is dispersed in a dispersing medium. The hard material production method provided by this invention comprises a step of polishing a hard material surface with the polishing composition.

## Description

### [Technical Field]

The present invention relates to a polishing composition favorably used for polishing an object formed of a hard material and a method for producing a hard material using the polishing composition. The present application claims priority to Japanese Patent Application No. 2014-078106 filed on April 4, 2014; the entire contents thereof are incorporated herein by reference.

### [Background Art]

The hard material generally refers to a material that is hard and cannot be easily processed. Specific examples include ceramic materials such as aluminum oxide, zirconium oxide, and silicon carbide; alloys such as titanium alloys, nickel alloys, and stainless steels; cemented carbides such as tungsten carbide-cobalt (WC-Co). It is not easy to polish these hard materials. Thus, usually, these materials are subjected to lapping with a very hard abrasive, such as diamond, CBN, and boron carbide.

For example, it has been disclosed that upon lapping with a diamond slurry, mirror polishing is carried out by chemical mechanical polishing with the use of colloidal silica (see Patent Document 1). As the abrasive used in the lapping process, besides diamond abrasives, the use of CBN, silicon carbide, alumina and boron carbide has been disclosed (see Patent Document 2). As the abrasive used in lapping, the use of a boron suboxide (BxO) is disclosed (see Patent Document 3). However, when lapping is carried out with these hard abrasives, because of considerably high cost of diamond or substantially long time required for polishing with colloidal silica, it has been a problem that it needs lots of time and cost to obtain a highly smooth surface.

### [Citation List]

### [Patent Literature]

[Patent Document 1] Japanese Patent Application Publication No. 2006-249536
[Patent Document 2] Japanese Patent Application Publication No. 2005-262350
[Patent Document 3] Japanese Patent Application Publication No. H7-34063

### [Summary of Invention]

### [technical Problem]

As a result of earnest studies, the present inventor has found out that with the use of a polishing composition that an abrasive formed of titanium diboride (TiB₂) is dispersed in a dispersing medium, a hard material can be processed at a high polishing rate. This invention has been made based on this finding. An objective thereof is to provide a polishing composition with which high-rate polishing is possible in an application where a polishing object (an object to be polished) formed of a hard material is polished.

### [Solution to Problem]

To achieve the objective, the polishing composition of this invention is characterized by being obtained by dispersing an abrasive formed of titanium diboride in a dispersing medium. In the polishing composition of this invention, the dispersing medium is preferably a solvent. In the polishing composition of this invention, the dispersing medium is preferably a bond and the abrasive is preferably fixed to the dispersing medium. The hard material production method according to this invention is characterized by comprising a step of polishing a surface of a hard material with the polishing composition.

With the polishing composition of this invention, an object formed of a hard material can be polished at a high polishing rate. In this description, the polishing object formed of a hard material refers to a polishing object with a surface (surface to be polished) that includes an area formed of a hard material. Besides to a polishing object entirely formed of a hard material, the art disclosed herein can also be applied to a polishing object having an area formed of a hard material in the surface to be polished.

### [Description of Embodiments]

An embodiment of the present invention is described below.

The present embodiment of the polishing composition is characterized by that an abrasive formed of titanium diboride is dispersed in a dispersing medium. Titanium diboride used as the abrasive is a very hard material having a Vickers hardness (Hv) of at least 2000. As for its production method, besides a method where titanium and boron are allowed to undergo a direct reaction, known methods include a method involving reduction of titanium oxide and boron trioxide and a method in which titanium and boron halides are allowed to undergo a gas phase reaction (e.g. see Japanese Patent Application Publication No. H5-139725). In the art disclosed herein, as for the titanium diboride abrasive, regardless of production method and form, generally available products can be used without particular limitations.

Titanium diboride is a crystalline substance that usually has a hexagonal crystal structure. The crystal is not limited in size; it may comprise a non-crystalline component. As far as the performance of the abrasive is not affected, it may comprise other elements, for example, impurities such as carbon, iron, oxygen, nitrogen, silicon, aluminum and zirconium. Highly pure titanium diboride is preferable. In particular, its purity is preferably 90 % by mass or higher, or more preferably 99 % by mass or higher. The purity of titanium diboride can be determined from the measurement value of the titanium diboride by an X-ray fluorescence system or from the intensities of diffraction peaks by X-ray powder diffraction as well. When the purity determined by an X-ray fluorescence system is different from the purity determined by X-ray powder diffraction, the measurement result of higher purity is used as the purity of the titanium diboride.

The titanium diboride in the polishing composition has a mean particle diameter of preferably 0.1 µm or larger, more preferably 0.5 µm or larger, or yet more preferably 1 µm or larger. With increasing mean particle diameter, the rate of polishing hard materials with the polishing composition will increase. In this aspect, when the mean particle diameter of the titanium diboride is 0.1 µm or larger, even 0.5 µm or larger, or yet even 1 µm or larger, it will become easy to increase the rate of polishing hard materials with the polishing composition to particularly favorable levels in practical use.

Although no particular limitations are imposed, in a preferable embodiment, the mean particle diameter of the titanium diboride can be 2 µm or larger, 2.2 µm or larger, or even 2.5 µm or larger. Titanium diboride of such sizes can further increase the rate of polishing hard materials; and therefore, it is favorable as, for example, the abrasive used in the lapping described later.

The mean particle diameter of titanium diboride is the mean particle diameter by weight (the mean particle diameter of the particle size distribution by weight (volume)) determined with a laser diffraction/scattering particle size analyzer. The mean particle diameter can be measured, using, for instance, LA-950 available from Horiba, Ltd.

The mean particle diameter of the titanium diboride in the polishing composition is preferably 50 µm or smaller, more preferably 10 µm or smaller, or yet more preferably 8 µm or smaller. With decreasing mean particle diameter, the dispersion stability of the polishing composition increases and the occurrence of scratches on the hard material after polished with the polishing composition is reduced. In this aspect, when the mean particle diameter of the titanium diboride is 50 µm or smaller, even 10 µm or smaller, or yet even 8 µm or smaller, it will be easy to increase the dispersion stability of the polishing composition and the surface smoothness of the polished hard material to particularly favorable levels in practical use.

The titanium diboride content in the polishing composition is preferably 0.05 % by mass or higher, more preferably 0.1 % by mass or higher, or yet more preferably 0.2 % by mass or higher. With increasing titanium diboride content, the rate of polishing hard materials with the polishing composition will increase. In this aspect, when the abrasive content in the polishing composition is 0.05 % by mass or higher, even 0.1 % by mass or higher, or yet even 0.2 % by mass or higher, it will be easy to increase the rate of polishing hard materials to particularly favorable levels in practical use.

The titanium diboride content in the polishing composition is preferably 40 % by mass or less, more preferably 30 % by mass or lower, or yet more preferably 20 % by mass or lower. Even if the titanium diboride content increases, the rate of polishing hard materials with the polishing composition is less likely to further increase, making the composition uneconomical. In this aspect, according to the art disclosed herein, when the titanium diboride content in the polishing composition is 40 % by mass or lower, even 30 % by mass or lower, or yet even 20 % by mass or lower, it is possible to maintain the rate of polishing hard materials at particularly favorable levels in practical use.

The abrasive in the polishing composition may comprise another abrasive besides the titanium diboride. Examples of the other abrasive include an abrasive essentially formed of any one species among diamond; borides such as zirconium boride, tantalum boride, chromium boride, molybdenum boride, tungsten boride, and lanthanum boride; carbides such as boron carbide and silicon carbide (e.g. green silicon carbide); oxides such as aluminum oxide, silicon oxide, zirconium oxide, titanium oxide and cerium oxide; and nitrides such as boron nitride (typically, cubic boron nitride); and the like. Examples of an abrasive essentially formed of silicon oxide include quartz.

From the standpoint of the polishing efficiency, the titanium diboride content is preferably high in the abrasive. In particular, the titanium diboride content in the abrasive is preferably 70 % by mass or higher, or more preferably 90 % by mass or higher. Here, the titanium diboride content in the abrasive refers to the ratio of titanium diboride to the total mass of the abrasive in the polishing composition.

A preferable embodiment of the dispersing medium to disperse the abrasive in the polishing composition is a solvent. The solvent is not particularly limited as long as it can disperse the abrasive. As the solvent, besides water, organic solvents such as alcohols, ethers, glycols and various types of oil can be used. Examples of the oil include oils such as mineral oils, synthetic oils, and vegetable oils. Among these oils, solely one species or a combination of two or more species can be used. Among them, a solvent comprising water as the primary component is preferable since it is free of issues with volatility, washability and so on and also in view of problems associated with disposal of polishing waste. In the solvent comprising water as the primary component, the water accounts for preferably 90 % by volume or higher, or more preferably 95 % by volume or higher (typically 99 % to 100 % by volume). As the water, ion-exchanged water (deionized water), distilled water, pure water and the like can be used.

To the polishing composition, a dispersing agent may be added to increase the dispersion stability. In a preferable polishing composition to which the dispersing agent is added, the dispersing medium is a solvent. Examples of the dispersing agent include polyphosphates such as sodium hexametaphosphate and sodium pyrophosphate. Water soluble polymers and their salts can also be used as the dispersing agent. The addition of the dispersing agent increases the dispersion stability of the polishing composition to make the slurry concentration uniform, whereby the supply of the polishing composition can be stabilized. On the other hand, when the dispersing agent is added in excess, the abrasive in the polishing composition is likely to precipitate out and hardens while in storage or transport. Thus, it is not easy to disperse the precipitate for the use of the polishing composition. In other words, the re-dispersibility of the abrasive in the polishing composition may decrease.

Examples of the watersoluble polymers used as the dispersing agent include polycarboxylic acids, polycarboxylates, polysulfonic acids, polysulfonates, polyamines, polyamides, polyols and polysaccharides as well as derivatives and copolymers thereof. More specific examples include polystyrene sulfonates, polyisoprene sulfonates, polyacrylic acid salts, polymaleic acid, polyitaconic acid, polyvinyl acetate, polyvinyl alcohols, polyglycerol, polyvinylpyrrolidone, copolymer of isoprene sulfonic acid and acrylic acid, copolymer of polyvinyl pyrrolidone and polyacrylic acid, copolymer of polyvinyl pyrrolidone and vinyl acetate, salts of naphthalene sulfonic acid formalin condensate, copolymer of diallylamine hydrochloride and sulfur dioxide, carboxymethyl cellulose, carboxymethyl cellulose salts, hydroxyethyl cellulose, hydroxypropyl cellulose, pullulan, chitosan, and chitosan salts.

The watersoluble polymer is not particularly limited in weight average molecular weight (Mw). From the standpoint of sufficiently obtaining the effect to increase the dispersion stability, the Mw is usually suitably about 1 × 10⁴ or higher (e.g. higher than 5 × 10⁴). The maximum Mw is not particularly limited. From the standpoint of the ease of filtration, washability, etc., it is usually suitably about 80 × 10⁴ or lower (e.g. 60 × 10⁴ or lower, typically 30 × 10⁴ or lower). For the Mw of the watersoluble polymer, the value by gel permeation chromatography (GPC) (aqueous, based on polyethylene oxide) can be used.

In the polishing composition in an embodiment comprising a dispersing agent, the dispersing agent content is, but not particularly limited to, for example, suitably 0.001 % by mass or higher, preferably 0.005 % by mass or higher, more preferably 0.01 % by mass or higher, or yet more preferably 0.02 % by mass or higher. It is usually suitably 10 % by mass or lower, or preferably 5 % by mass or lower, for example, 1 % by mass or lower.

To the polishing composition, various types of surfactant can be further added. The surfactant referred to here is typically a low molecular weight compound as compared to the dispersing agent and preferably a compound having a molecular weight lower than 1 × 10⁴. In a preferable polishing composition to which the surfactant is added, the dispersing medium is a solvent. In an embodiment using a surfactant, adsorbed to the surfaces of the abrasive and the polishing object, the surfactant modifies their surface conditions to change the dispersibility of the abrasive and to form protective film on the surface of the polishing object, whereby it can prevent the occurrence and propagation of defects in the surface of the polishing object.

The surfactant can be either anionic or nonionic. Examples of preferable nonionic surfactants include a polymer having several identical or different oxyalkylene groups and a compound obtained by coupling an alcohol, hydrocarbon or aromatic ring to the polymer. More specific examples include polyoxyethylene alkyl ether, polyoxyethylene polyoxypropylene alkyl ether, polyoxyethylene polyoxybutylene alkyl ether, polyoxyethylene polyoxypropylene polyoxybutylene alkyl ether, polyoxyethylene carboxylate, polyoxyethylene dicarboxylate, polyoxyethylene polyoxypropylene carboxylate, polyoxyethylene polyoxybutylene carboxylate, polyoxyethylene polyoxypropylene polyoxybutylene carboxylate, polyoxyethylene polyoxypropylene copolymer, polyoxyethylene polyoxybutylene copolymer, polyoxyethylene polyoxypropylene polyoxybutylene copolymer, polyoxyethylene sorbitan fatty acid esters and polyoxyethylene sorbitol fatty acid esters, polyoxyethylene sorbitan monolaurate, polyoxyethylene sorbitan monopalmitate, polyoxyethylene sorbitan monostearate, polyoxyethylene sorbitan monooleate, polyoxyethylene sorbitan trioleate, polyoxyethylene sorbitan monocaprylate, and polyoxyethylene sorbitol tetraoleate.

Examples of anionic surfactants include sulfonic acid-based surfactants, with more specific examples including alkyl sulfonic acids, alkyl ether sulfonic acids, polyoxyethylene alkyl ether sulfonic acids, alkyl aromatic sulfonic acid, alkyl ether aromatic sulfonic acid, and polyoxyethylene alkyl ether aromatic sulfonic acid.

In the polishing composition in an embodiment comprising a surfactant, the surfactant content is, but not particularly limited to, for example, suitably 0.001 % by mass or higher, preferably 0.005 % by mass or higher, more preferably 0.01 % by mass or higher, or yet more preferably 0.02 % by mass or higher. It is usually suitably 10 % by mass or lower, or preferably 5 % by mass or lower, for example, 1 % by mass or lower.

The amounts of dispersing agent and surfactant in the polishing composition may vary in accordance with the type, size and amount of abrasive used as well. Thus, it is preferable to suitably select their optimal amounts as necessary. During polishing, these dispersing agent and surfactant act not only on the abrasive, but also on the polishing object. Accordingly, when used, some dispersing agents may reduce the rate of polishing the object. It is preferable to select from this viewpoint the types and amounts of dispersing agent and surfactant added.

In the polishing composition wherein the dispersing medium is a solvent, the polishing composition is not particularly limited in pH. The polishing composition is usually preferably at pH 1 or higher. The pH of the polishing composition is preferably 12 or lower. When the pH of the polishing composition is in this range, it makes it easy to increase the rate of polishing hard materials with the polishing composition, to a particularly favorable level in practical use. In view of the pH-sensitive nature of the polishing composition, etc., the polishing composition is preferably used at an appropriate pH. For instance, on stainless steel, the pH of the polishing composition can be 1 or higher, but 8 or lower, or more preferably 1 or higher, but 5 or lower (e.g. 2 or higher, but 4 or lower).

The pH of the polishing composition can be adjusted with various acids, bases or salts thereof. In particular, examples of preferably used species include organic acids such as citric acid and other organic carboxylic acids, organic phosphonic acids, and organic sulfonic acids; inorganic acids such as phosphoric acid, phosphorous acid, sulfuric acid, nitric acid, hydrochloric acid, boric acid, and carbonic acid; organic bases such as tetramethoxyammonium oxide, trimethanolamine, and monoethanolamine; inorganic bases such as potassium hydroxide, sodium hydroxide, and ammonia; and salts thereof. These acids, bases and salts can be used solely as one species or in a combination of two or more species.

Among the combinations of acids and bases, pH buffering effects can be expected especially with a combination of a weak acid and a strong base, a strong acid and a weak base, or a weak acid and a weak base. Among the combinations of acids and bases, a combination of a strong acid and a strong base allows for the adjustment of not only the pH but also the electric conductivity in a small amount.

The polishing composition of this invention may comprise, as necessary, other components besides the components described above. Examples of such other components include anticorrosive, chelating agent, preservative and antifungal agent.

Examples of the anticorrosive include amines, pyridines, tetraphenylphosphonium salts, benzotriazoles, triazoles, tetrazoles and benzoic acid.

Examples of the chelating agent include carboxylic acid-based chelating agents such as gluconic acid; amine-based chelating agents such as ethylenediamine, diethylenetriamine, and trimethyl tetraamine; polyaminopolycarboxylate-based chelating agents such as ethylenediamine tetraacetate, nitrilotriacetic acid, hydroxyethylethylenediamine triacetate, triethylene tetraamine hexaacetate, and diethylenetriamine pentaacetate; organic phosphonic acid-based chelating agent such as 2-aminoethylphosphonic acid, 1-hydroxyethylidene-1,1-diphosphonic acid, aminotris(methylene phosphonic acid), ethylenediamine tetrakis(methylene phosphonic acid), diethylenetriamine penta(methylene phosphonic acid), ethane-1,1-diphosphonic acid, ethane-1,1,2-triphosphonic acid, methane hydroxyphosphonic acid, and 1-phosphonobutane-2,3,4-tricarboxylic acid; phenol derivatives; and 1,3-diketones.

Examples of the preservative include sodium hypochlorite. Examples of the antifungal agent include oxazolines such as oxazolidine-2,5-dione.

The method for producing the polishing composition of this invention is not particularly limited as long as the polishing composition described above can be prepared. For example, the abrasive as well as other components as necessary including a dispersing agent and a pH-adjusting agent are mixed and stirred in a solvent to obtain the polishing composition.

A preferable embodiment of the dispersing medium to disperse the abrasive in the polishing composition is a bond. In particular, excellent processing performance can be expected to be obtained especially in polishing a hard material with the use of the abrasive of this invention as a polishing composition fixed with a bond, such as with resin-bonded grindstones, metal-bonded grindstones, vitrified-bonded grindstones, and electroplated grindstones as well as segments of polishing wheels, abrasive cloth and paper. The bond component is not particularly limited; generally known resins, metals and the like can be used. To the bond, various known additives may be added as necessary. It may have another abrasive in addition to the titanium diboride abrasive.

The present description thus provides a polishing composition for hard materials, with the composition comprising an abrasive formed of titanium diboride and a dispersing medium to disperse the abrasive.

In the polishing composition according to a preferable embodiment, the dispersing medium is a solvent. The polishing composition in the embodiment wherein the dispersing medium is a solvent can be preferably used for polishing a hard material, for instance, in an embodiment where while the polishing composition is supplied to a metal surface plate and the hard material as the polishing object is in contact with the surface plate, the hard material and the surface plate are moved relatively to each other. The polishing composition in the embodiment wherein the dispersing medium is a solvent can also be preferably used for polishing a hard material in an embodiment where while the polishing composition is supplied to a polishing pad applied to a surface plate and the hard material as the polishing object is in contact with the polishing pad, the hard material and the polishing pad are moved relatively to each other. This description provides a method for producing a hard material, the method comprising a step of polishing a hard material in such a manner. As it is clear to an ordinarily skilled person, in these embodiments, the concept of contact between the hard material and the surface plate or the polishing pad encompasses a contact via the polishing composition (typically, a contact via the abrasive in the polishing composition).

The polishing composition according to another preferable embodiment, the dispersing medium is a bond and the abrasive is fixed to the dispersing medium. This description provides a hard material production method for producing a hard material, the method comprising a step of polishing a hard material surface using the polishing composition in such an embodiment wherein the abrasive is fixed to a bond as the dispersing medium.

In the hard material production method in the present embodiment, the hard material refers to a material with high hardness, typically to a material having a Vickers hardness above 100 HV. Examples of the hard material include ceramic materials such as aluminum oxide, zirconium oxide, and silicon carbide; alloys such as titanium alloys, nickel alloys, and stainless steel; cemented carbides such as tungsten carbide-cobalt (WC-Co). The Vickers hardness indicates the durability against indentation pressure; in particular, it is the hardness determined by the method described in JIS Z2244:2009.

Ceramic is a sintered compact obtained by high-temperature thermal processing of a crystalline material formed of an oxide, carbide, nitride or boride of a metal, etc., with specific examples including aluminum oxide, zirconium oxide and silicon carbide.

The art disclosed herein can be preferably applied in polishing a hard metallic material, that is, a metallic material having a Vickers hardness above 100 HV

The titanium alloy comprises titanium as the primary component and further comprises, as metal species different from the primary component (non-primary metal species), for instance, aluminum, iron and vanadium. The non-primary metal species content in the titanium alloy is, for instance, 3.5 % to 30 % by mass to the entire alloy. Examples of the titanium alloy include Species 11 to 23, 50, 60, 61 and 80 among the species listed in JIS H4600:2012.

The nickel alloy comprises nickel as the primary component and further comprises, as metal species different from the primary component (non-primary metal species), at least one species selected among, for instance, iron, chromium, molybdenum, and cobalt. The non-primary metal species content in the nickel alloy is, for instance, 20 % to 75 % by mass to the entire alloy. Examples of the nickel alloy include Species NCF600, 601, 625, 750, 800, 800H, 825, NW0276, 4400, 6002, and 6022 among the alloy numbers listed in JIS H4551:2000.

The stainless steel comprises iron as the primary component and further comprises, as metal species different from the primary component (non-primary metal species), at least one species selected from the group consisting of, for instance, chromium, nickel, molybdenum, and manganese. The non-primary metal species content in the stainless steel is, for instance, 10 % to 50 % by mass to the entire alloy. Examples of the stainless steel include Species SUS201, 303, 303Se, 304, 304L, 304NI, 305, 305JI, 309S, 310S, 316, 316L, 321, 347, 384, XM7, 303F, 303C, 430, 430F, 434, 410, 416, 420J1, 420J2, 420F, 420C, and 631J1 among the species numbers listed in JIS G4303:2005.

As an example, described here is a step of polishing a substrate (polishing object) that is formed of stainless steel among hard materials.

Polishing of a stainless steel substrate with the polishing composition of this invention can be carried out, using a general polishing machine. Examples of the polishing machine include a single-side polishing machine and a double-side polishing machine. With respect to the single-side polishing machine, the substrate is held with a holder called a carrier; while supplying the polishing composition, the surface plate is pushed against one face of the substrate and rotated to polish the substrate's single face. With respect to the double-side polishing machine, the substrate is held with a holder called a carrier; while supplying the polishing composition from the top, the surface plates are pushed against the opposing substrate faces and they are rotated in opposite directions to polish the two faces of the substrate at the same time. Here, the method where the substrate is directly polished with the surface plate surface is called lapping. The method where a polishing pad is applied to the surface plate surface and polishing is carried out between the substrate and the surface of the polishing pad applied is called polishing. Here, so-called chemical mechanical polishing (CMP) may be carried out where a substrate is polished by the physical effects of friction among the surface plate or polishing pad, the polishing composition and the substrate as well as the chemical effects of the polishing composition on the substrate.

The polishing conditions in the polishing step are not particularly limited. From the standpoint of increasing the polishing rate, it is preferable to set the polishing pressure to the substrate and the linear velocity within certain ranges.

In particular, the polishing pressure is preferably 50 g or higher per cm² of processing area, or more preferably 100 g or higher per cm² of processing area. The polishing pressure is preferably 1000 g or lower per cm² of processing area. With increasing polishing pressure, during the polishing, the abrasive in the polishing composition and the substrate will have a greater number of contact points, causing greater friction. Thus, the polishing rate tends to increase under high load pressure.

The linear velocity is generally affected by the number of rotations of the carrier, the dimensions of the substrate, the number of substrates, etc. At a high linear velocity, the friction on the substrate increases and the edges become more susceptible to mechanical polishing. The friction generates heat, leading to a tendency toward greater chemical effects of the polishing composition.

In this embodiment, the linear velocity is preferably 10 m/min or higher, or more preferably 30 m/min or higher. The linear velocity is preferably 300 m/min or lower, or more preferably 200 m/min or lower. With increasing linear velocity, a higher polishing rate can be obtained. At an excessively low linear velocity, it tends to be hard to obtain a sufficient polishing rate. At an excessively high linear velocity, friction may damage the substrate or the polishing pad surface, or the substrate may not receive enough friction in a so-called slipping state, whereby it cannot be sufficiently polished.

The amount of the polishing composition supplied during the polishing may vary depending on the type of substrate to be polished and the polishing machine as well as other polishing conditions, etc. The polishing composition should be in a sufficient amount to be evenly supplied to the entire interface between the substrate and the surface plate. When the polishing composition is supplied in an extremely small amount, the polishing composition may not be supplied to the entire substrate or the polishing composition may dry and solidify to cause defects to the substrate surface. When the polishing composition is supplied in an excessively large amount, in addition to it being uneconomical, the excess polishing composition (particularly the medium such as water) may impede friction to hinder the polishing.

For the surface plate used in the polishing step using the polishing composition in the embodiment, for lapping without applying a polishing pad, it is desirable to be easy to be processed to maintain its surface state precisely. Thus, a preferably used surface plate has a surface formed of a metallic material, for instance, cast iron, tin, copper or copper alloy. The surfaces of these surface plates (surface plate surfaces) may have grooves for the stable supply of the polishing composition or for the adjustment of processing pressure. The groove's shape and depth are arbitrary. For instance, grooves may be carved in a grid or in a radial pattern.

The surface plate preferably has a surface state that allows the processing force of the abrasive to efficiently work on the polishing object. For instance, a preferably used surface plate has a number of fine grooves (or "micro grooves" hereinafter) formed on its surface. With a surface plate having such micro grooves on its surface, during the polishing of an object, the abrasive particles are partially trapped in the micro grooves to be temporarily fixed (held) to the surface plate surface. By this, the processing force of the abrasive is allowed to efficiently work on the polishing object. Lapping with such a surface plate is likely to bring about great polishing efficiency. The micro grooves are not particularly limited in shape. For instance, the aspect ratio of the micro grooves is not particularly limited. Accordingly, the concept of micro grooves referred to herein may encompass grooves in shapes generally called dents or indentations.

While no particular limitations are applied, with suitably increasing width of the micro grooves, the abrasive tends to be more easily trapped in the micro grooves. From such a standpoint, the micro grooves can have an average width of, for instance, 0.3 µm or larger; it is usually 0.5 µm or larger, typically suitably larger than 0.5 µm, preferably 1 µm or larger, or more preferably 2 µm or larger. With suitably decreasing width of the micro grooves, the processing force of the abrasive particles trapped in the micro grooves tends to be more readily allowed to work on the polishing object. From such a standpoint, the micro grooves can have an average width of, for instance, 100 µm or smaller; it is usually suitably 50 µm or smaller, preferably 20 µm or smaller, more preferably 10 µm or smaller, or yet more preferably 5 µm or smaller. The average width of the micro grooves can be preferably applied to the abrasive having a mean particle diameter of, for instance, about 1 µm to 20 µm.

The polishing method and the hard material production method disclosed herein can be preferably practiced in an embodiment of polishing an object with an abrasive having a mean particle diameter suited to the micro groove width in accordance with the width of micro grooves present in the surface plate surface. The polishing object can be a hard material disclosed herein (e.g. a hard metallic material). A preferable embodiment uses a polishing composition selected so that the abrasive used for polishing the object has a mean particle diameter of 0.2 to 3 times the average micro groove width, more preferably 0.3 to 2.5 times, yet more preferably 0.5 to 2 times, for example, 0.5 to 1.8 times. An abrasive that satisfies the relation to the average width of micro grooves in the surface plate surface tends to comprise a large number of particles of sizes likely to get trapped in the micro grooves. Accordingly, the polishing composition comprising such an abrasive allows the processing force of the abrasive to efficiently work on the polishing object. In other words, the micro grooves in the surface plate surface can be effectively used to bring about great polishing efficiency even with a hard material.

Although no particular limitations are applied, when polishing with a surface plate wherein the micro grooves formed on its surface has an average width of 1 µm to 10 µm (e.g. 2 µm to 5 µm), it is preferable to use a polishing composition comprising titanium diboride having a mean particle diameter of 0.1 µm to 50 µm as the abrasive. The mean particle diameter of the titanium diboride can be more preferably 0.5 µm to 20 µm, or yet more preferably 1 µm to 15 µm, for instance, 2 µm to 10 µm. Examples of preferable polishing objects according to this embodiment include stainless steel and other hard metallic materials.

The micro grooves in the surface plate surface are not particularly limited in depth. Usually, it is suitable that the micro grooves has an average depth of 50 µm or less; from the standpoint of the ease of washing the surface plate surface and the utility of the abrasive, the average depth is preferably 10 µm or less, or more preferably 5 µm or less, for instance, 2 µm or less. With suitably increasing average depth of the micro grooves, the abrasive particles are more easily trapped in the micro grooves, with the trapped abrasive particles being more readily allowed to work on the polishing object. From such a viewpoint, the average depth of the micro grooves is usually suitably 0.1 µm or greater, preferably 0.2 µm or greater, more preferably 0.5 µm or greater, or yet more preferably greater than 0.5 µm.

There are no particular limitations to the method for forming micro grooves in such a form in the surface plate surface. For instance, it is preferable to employ a method where the surface state of the surface plate is conditioned, using an abrasive suited to the size of micro grooves to be formed and the material of the surface plate surface (i.e. a surface plate surface-conditioning abrasive). Examples of the abrasive that can be preferably used to adjust the surface plate surface formed of a metallic material as described above include hard abrasives such as green silicon carbide abrasives (or "GC abrasives" hereinafter), titanium diboride abrasives and boron carbide abrasives. Among them, GC abrasives are preferable.

In adjusting the surface plate surface, the surface plate surface-conditioning abrasive may be applied as a free abrasive in a form of surface plate-conditioning slurry in which the abrasive is dispersed in a solvent, or may be applied as a fixed abrasive in a form where the abrasive is fixed with a solid bond. It is usually preferable to condition the surface with a surface plate surface-conditioning slurry. As the method for adjusting the widths of the micro grooves formed in the surface plate surface, the following methods can be used: a method where the abrasive used as the surface plate surface-conditioning abrasive is changed to a species having a different mean particle diameter, a method using a mixture of two or more species of abrasive at a suitable ratio, a method where the material of the surface plate surface-conditioning abrasive is changed, a method where the conditions under which the surface plate surface is conditioned are changed, and like method. As the method for adjusting the depth of the micro grooves formed in the surface plate surface, the following methods can be employed: a method where the material of the surface plate surface-conditioning abrasive is changed, a method where the conditions under which the surface plate surface is conditioned are changed, and like method. Here, the conditions under which the surface plate surface is conditioned include, for instance, processing pressure, processing time, and surface plate speed.

The size of the surface plate surface-conditioning abrasive can be suitably selected in accordance with the intended width of the micro grooves. Although no particular limitations are applied, in an embodiment of the art disclosed herein, an abrasive (e.g. a GC abrasive) having a mean particle diameter of 25 µm to 120 µm (more preferably 35 µm to 75 µm) can be preferably used as the surface plate surface-conditioning abrasive. For the surface plate surface-conditioning abrasive, a mixture of two or more species of abrasives different in size and/or material can be used.

There are no particular limitations to the concentration of surface plate surface conditioning abrasive in the surface plate surface-conditioning slurry or to the processing conditions for conditioning the surface of the polishing surface plate with the slurry; they can be suitably selected so as to obtain a desirable surface state. For instance, the concentration of surface plate surface-conditioning abrasive in the surface plate surface-conditioning slurry can be about 5 % to 20 % by mass (e.g. 10 % to 15 % by mass).

As understood from the description above and Examples described later, the matters disclosed in the present description include an abrasive used for conditioning the surface of a polishing surface plate (i.e. a surface plate surface-conditioning abrasive). It also encompasses a surface plate surface-conditioning slurry comprising the abrasive. As the surface plate surface-conditioning abrasive, an abrasive having a mean particle diameter of 25 µm to 120 µm (more preferably 35 µm to 75 µm) can be preferably used. The abrasive may comprise at least one species among GC abrasives, titanium diboride abrasives and boron carbide abrasives. Among them, GC abrasives are preferable.

The hard material production method disclosed herein may comprise a step of polishing a hard material with a polishing composition disclosed herein, with the polishing composition comprising a solvent as the dispersing medium; and a step of conditioning the surface of a metal surface plate used in the polishing step. For conditioning the surface of the metal surface plate, a surface plate surface-conditioning abrasive disclosed herein can be preferably used. The surface plate surface-conditioning abrasive is preferably used as a surface plate surface-conditioning slurry comprising the surface plate surface-conditioning abrasive as a free abrasive.

The matters disclosed in this description include a polishing composition set comprising a set of (A) a surface plate surface-conditioning slurry disclosed herein and (B) a polishing composition disclosed herein wherein the dispersing medium is a solvent. In the polishing composition set, the surface plate surface-conditioning slurry (A) and the polishing composition (B) are stored separately. The surface plate surface-conditioning slurry (A) in such a polishing composition set can be preferably used in a hard material production method disclosed herein for conditioning the surface of a metal surface plate used in polishing a hard material. The polishing composition (B) in the polishing composition set can be preferably used, for instance, in a step of polishing a hard material in a hard material production method disclosed herein. The polishing composition set can be in an embodiment that comprises, in place of the surface plate surface-conditioning slurry (A), the abrasive to be used to form the slurry. It can also be in an embodiment that comprises, in place of the polishing composition (B), the abrasive used to form the composition.

Although no particular limitations are applied, a favorable example of the polishing composition set comprises a set of: (A) a surface plate surface-conditioning slurry comprising a surface plate surface-conditioning abrasive having a mean particle diameter of 25 µm to 120 µm (more preferably 35 µm to 75 µm); and (B) a polishing composition comprising an abrasive having a mean particle diameter of 0.1 µm to 50 µm (more preferably 0.5 µm to 20 µm, or yet more preferably 1 µm to 15 µm, e.g. 2 µm to 10 µm). The surface plate surface-conditioning abrasive may comprise at least one species among GC abrasives, titanium diboride abrasives, and boron carbide abrasives. In particular, GC abrasives are preferable. As the abrasive in the polishing composition (B), a titanium diboride disclosed herein can be preferably used.

On the other hand, when polishing with an applied polishing pad, while the material of the surface plate is not particularly limited, it is favorable to use stainless steel with high strength and excellent chemical resistance. The polishing pad applied to the surface plate is not limited by physical properties such as its material, thickness and hardness. An arbitrary polishing pad can be used, with examples including polyurethane types, non-woven fabric types, swede types, abrasive-containing types, abrasive-free types and so on, with these varying in hardness and thickness. Because of the demand for the use under high pressure, among polishing pads, a pad less susceptible to deformation caused by the pressure during the process (i.e. a hard pad) is more preferable. In particular, a preferable polishing pad has a hardness of 70 or higher in the hardness measurement using a Shore-A hardness tester specified in Japan Industrial Standards (JIS) K6253.

In particular, the hardness of a polishing pad can be increased with the use of a pad with an increased apparent density, such as so-called hard polyurethane.

The present embodiment provides the following advantages:
The polishing composition in the present embodiment is characterized by that an abrasive formed of titanium diboride is dispersed in a dispersing medium. This polishing composition brings about high-rate polishing of a hard material.

The polishing compositions used for polishing and lapping can be collected and reused (used in cycles). More specifically, a used polishing composition discharged from a polishing machine can be collected temporarily in a tank and re-supplied from the tank to the polishing machine. This embodiment reduces the need for disposal of the used polishing composition as a waste and thus can reduce the environmental load as well as the cost.

When the polishing composition is used in cycles, among the components such as the abrasive consumed or lost from the polishing composition upon the use for polishing, at least some of the loss can be replenished. The components for replenishment can be added to the used polishing composition, individually or as a mixture containing two or more of the components at an arbitrary ratio.

The rate of supplying the polishing composition to the polishing machine is suitably selected in accordance with the type of hard material to be polished, the type of polishing machine and the polishing conditions. However, it is preferable that the rate (flow rate) is sufficient for the uniform supply of the polishing composition to the entire surface plate or to the entire polishing pad.

Among hard materials, with respect to a substrate requiring a particularly high level of surface smoothness such as an electronic material substrate and a substrate for producing a crystalline material, it is preferable to carry out precision polishing after the polishing with the polishing composition in the embodiment described earlier. The precision polishing uses an abrasive-containing polishing composition, that is, a composition for precision polishing. From the standpoint of reducing unevenness, roughness and defects in the substrate surface, the abrasive in the precision polishing composition has a mean particle diameter of preferably 0.15 µm or smaller, more preferably 0.10 µm or smaller, or yet more preferably 0.07 µm or smaller. From the standpoint of increasing the polishing rate, the mean particle diameter of the abrasive in the precision polishing composition is preferably 0.01 µm or larger, or more preferably 0.02 µm or larger. The abrasive favorably used in the precision polishing composition is colloidal oxide particles such as colloidal silica. The mean particle diameter of the abrasive in the precision polishing composition can be measured by dynamic light scattering, using, for instance, NANOTRAC UPA-UT151 by Nikkiso Co. Ltd.

The precision polishing composition preferably has a pH of 1 to 4 or 9 to 11. The pH of the precision polishing composition can be adjusted with the use of various acids, bases or their salts, similarly to the polishing composition in the aforementioned embodiment.

To the precision polishing composition, as necessary, additives can be added, such as chelating agent, watersoluble polymer, surfactant, preservative, anti-fungal agent, and anticorrosive.

The polishing composition and the precision polishing composition in these embodiments may be prepared by individually diluting their stock compositions with water.

Described next is the effects of the polishing composition in polishing a hard material. In the polishing composition, an abrasive formed of titanium diboride is dispersed in a dispersing medium. With the polishing composition, a hard material can be polished at a high polishing rate. Titanium diboride is less hard than diamond. Nonetheless, it brings about a high polishing rate. While the reason for this is not clear, it may have something to do with diamond being carbonized to have a lower degree of surface hardness due to the frictional heat during polishing while, although not as hard as diamond, titanium diboride not undergoing changes and stably providing sufficient hardness for the process.

These effects are absent from conventional polishing compositions. The present polishing composition is distinct from various conventional technologies.

The present embodiment described in detail above produces the following effects:
(1) Highly efficient polishing is possible as compared to conventional polishing with diamond.
(2) The particle diameter of the abrasive and the concentration of the abrasive in the polishing slurry can be reduced, leading to reduction of the process cost.

The present invention is described further in detail with Examples and Comparative Examples below; however, the present invention is not limited to these specific examples.

Various abrasives listed in Table 1 were obtained first. These abrasives were dispersed in water and adjusted to a pH of about 3.5 with addition of 5 g/L of citric acid and 10 g/L of polyacrylic acid to prepare the respective polishing compositions of Examples 1 to 9 and Comparative Examples 1 to 8. Table 2 details the respective polishing compositions.

The column headed "Mean particle diameter" in Table 1 shows the results of measurement of mean particle diameter of the various abrasives. Each measured mean particle diameter value shows the weight mean diameter (mean diameter of particle size distribution by weight (volume)) determined with LA-950 available from Horiba, Ltd.

The column headed "Hardness" in Table 1 shows the Vickers hardness values (Hv) of the materials used as the various abrasives. Vickers hardness values can be measured with HMV-G available from Shimadzu Corporation.

The column headed "True density" in Table 1 shows the specific gravity values (g/cm³) of the materials used as the various abrasives, measured by the method specified as the gas substitution method in JIS R1620. True density values can be measured with ACCUPYC 1330 available from Shimadzu Micromeritics Co., Ltd.

**[Table 1]**

| Abrasive | Mean particle diameter (µm) | Hardness (Hv) | True density (g/cm³) |
|---|---|---|---|
| TiB₂ (1) | 8.0 | 3,366 | 3.52 |
| TiB₂ (2) | 3.0 | 3,366 | 3.52 |
| Diamond | 8.0 | 9,000 | 3.35 |
| B₄C | 7.0 | 2,250 | 2.51 |
| Al₂O₃ | 8.0 | 1,900 | 3.85 |
| WB | 7.0 | 3,703 | 15,73 |

**[Table 2]**

| | Abrasive | | pH | Polishing condition | Polishing rate (µm/min) | Surface roughness Ra (nm) | Cost | Handling |
|---|---|---|---|---|---|---|---|---|
| | Species | Amount (% by masss) | | | | | | |
| Ex.1 | TiB₂(1) | 5.0 | 3.28 | A | 1.249 | 159 | 11 | |
| Ex.2 | TiB₂ (1) | 2.5 | 3.26 | A | 1.523 | 136 | 26 | |
| Ex.3 | TiB₂ (1) | 1.25 | 3.11 | A | 1.401 | 133 | 47 | |
| Ex. 4 | TiB₂ (2) | 1.6 | 3.16 | A | 1.414 | 142 | 37 | |
| Ex. 5 | TiB₂ (2) | 08 | 3.10 | A | 1.578 | 112 | 83 | |
| Ex. 6 | TiB₂ (2) | 04 | 3.07 | A | 1.120 | 98 | 118 | |
| Ex. 7 | TiB₂ (1) | 20 | 341 | B | 0.800 | 71 | 2 | |
| Ex. 8 | TiB₂ (1) | 15 | 3.38 | B | 0.676 | 68 | 2 | |
| Ex. 9 | TiB₂ (1) | 10 | 3.32 | B | 0.526 | 56 | 2 | |
| Comp. Ex. 1 | diamond | 20 | 322 | A | 0.425 | 193 | 0.2 | |
| Comp. Ex. 2 | diamond | 8.0 | 3.33 | A | 0.901 | 185 | 1 | |
| Comp. Ex.3 3 | diamond | 5 | 3.18 | A | 0851 | 146 | 2 | |
| Comp. Ex. 4 | B₄C | 20 | 3.42 | A | 0.507 | 176 | 1 | |
| Comp. Ex. 5 | Al₂O₃ | 20 | 3.21 | A | 0.305 | 96 | 6 | |
| Comp. Ex.6 6 | WB | 20 | 3.41 | A | 0.474 | 166 | 1 | Poor |
| Comp. Ex. 7 | diamond | 20 | 333 | B | 0.582 | 57 | 0.2 | |
| Comp. Ex. 8 | Al₂O₃ | 20 | 321 | B | 0.432 | 52 | 9 | |

Using the polishing compositions of Examples 1 to 6 and Comparative Examples 1 to 6, lapping of SUS304 objects were then carried out under the polishing condition A shown in Table 3. The surface plate used in the lapping had been subjected in advance to polishing with a surface plate surface-conditioning slurry to form micro grooves of 2 µm to 5 µm in width and 0.8 µm to 2 µm in depth in the surface plate surface. The surface plate surface-conditioning slurry used contained a GC abrasive of grain size #320 and a GC abrasive of grain size #240 at 1:1 mass ratio at a total concentration of 13 % by mass. With respect to the dimensions of the surface plate, the diameter is 20 cm, the core diameter 2.8 cm, the radius (excluding the core part) 8.6 cm and the effective surface area 307.8456 cm².

Using the polishing compositions of Examples 7 to 9 and Comparative Examples 7 and 8, polishing of SUS304 objects were carried out under the polishing condition B shown in Table 4.

Before and after the polishing, the mass of each polishing object was measured. Based on the difference between the pre-polishing and post-polishing mass values, the polishing rate was determined. Using a shape measurement laser microscope VK-100/X200 available from Keyence Corporation, the polished objects were measured for surface roughness (Ra) value. The polishing rate and the average surface roughness values are shown in the columns headed "Polishing rate" and "Surface roughness" in Table 2, respectively.

The column headed "Cost" in Table 2 shows the relative cost performance scores determined from the prices and polishing rates of the abrasives with the score of Comparative Example 2 being 1. The better the cost performance is, the larger the score is, indicating a lower polishing cost.

**[Table 3]**

| <Polishing condition A> |
|---|
| Polishing machine: FACT 200 available from Nano Factor |
| Polishing pressure: 170 g/cm² |
| Surface plate speed: 75 rpm (linear velocity: 47 m/min) |
| Surface plate: cast iron (no grooves) |
| Flow rate: 7 mL/min |
| Object: SUS304 (three disk-form pieces of 25.4 mm in diameter) |

**[Table 4]**

| <polishing condition B> |
|---|
| Polishing machine: EJ-380IN-CH available from Engis |
| Polishing pressure: 150 g/cm² (linear velocity: 107 m/min) |
| Surface plate speed: 90 rpm |
| Surface plate: pad (NP3100N-1P15 available from Toyo Advanced |
| Technologies Co., Ltd.) |
| Flow rate: 17 mL/min |
| Object: SUS304 (three disk-form pieces of 25.4 mm in diameter) |

As evident from Table 2, when the SUS304 objects were polished, the polishing compositions of Examples 1 to 6 and the polishing compositions of Examples 7 to 9 showed higher polishing rates than the polishing compositions of Comparative Examples 1 to 6 and the polishing compositions of Comparative Examples of 7 to 8, respectively. It has been found that because of its notably high true density, the WB (tungsten boride) abrasive used in Comparative Example 6 is highly likely to cause trouble such as precipitation when the polishing composition is supplied.

Although specific embodiments of the present invention have been described in detail above, these are merely for illustrations and do not limit the scope of claims. The art according to the claims includes various modifications and changes made to the specific embodiments illustrated above.

## Claims

1. A polishing composition for hard materials, the composition **characterized by** that an abrasive formed of titanium diboride is dispersed in a dispersing medium.

2. The polishing composition according to Claim 1, wherein the dispersing medium is a solvent.

3. The polishing composition according to Claim 1, wherein the dispersing medium is a bond and the abrasive is fixed to the dispersing medium.

4. A method for producing a hard material, the method comprising a step of polishing a hard material, wherein, while the polishing composition according to Claim 2 is supplied to a metal surface plate and the hard material is in contact with the surface plate, the hard material and the surface plate are moved relatively to each other.

5. A method for producing a hard material, the method comprising a step of polishing a hard material, wherein, while the polishing composition according to Claim 2 is supplied to a polishing pad applied to a surface plate and the hard material is in contact with the polishing pad, the hard material and the polishing pad are moved relatively to each other.

6. A method for producing a hard material, the method comprising a step of polishing a hard material surface with the polishing composition according to Claim 3.

7. The hard material production method according to any one of Claims 4 to 6, wherein the hard material is stainless steel.
